# EUROPEAN PATENT SPECIFICATION

(11) **EP 0 436 904 B1**
(45) Date of publication and mention of the grant of the patent: **15.06.1994**
(21) Application number: 90124995.3
(22) Date of filing: 20.12.1990
(51) Int. Cl.: B29C 41/06

(54) **Rotational mold apparatus**
Vorrichtung zum Rotationsgiessen
Appareil pour mouler par rotations

(30) Priority: 08.01.1990 US 462046
(43) Date of publication of application: 17.07.1991
(73) Proprietor: DAVIDSON TEXTRON INC., Dover New Hampshire 03820-1504 (US)
(72) Inventor: Piazza, Charles L., Somersoworth, New Hampshire 03878 (US); Therrien, Edward E., Newington, New Hampshire 03801 (US)
(74) Representative: Hoeger, Stellrecht & Partner

(56) References cited:
- EP-A- 0 143 892
- EP-A- 0 230 174
- DE-A- 2 625 323

## Description

### Field of the Invention

This invention relates to rotational mold apparatus and more particularly to rotational mold apparatus having a base frame connected to the spider of a rotational mold for supporting a bottom shell mold and either a cover or a top shell mold for rotation by the spider to distribute thermoplastic polymer particles.

### Background of the Invention

Various rotational mold apparatus have been suggested for distributing thermoplastic particles against a heated mold surface to form a thin shell article conforming to the shape of the casting surface. Examples of such apparatus are shown in US Patents 3,222,725; 4,167,382 and 4,767,299. While suitable for their intended purpose such prior art mold apparatus require full removal of covers or top shells.

Likewise, various prior art rotational mold apparatus have been proposed with a pivotal member which operates during a molding cycle. Such apparatus however does not include a support for a concave shell mold forming one part of a closed casting system for depositing thermoplastic particles onto a heated mold surface for forming a thin shell article with a shape conformed to that of the casting surface. Examples of such mold apparatus are set forth in US Patents 2,060,121 which discloses a centrifuge for extracting water from bricks; 2,230,778 which discloses a tile press and cutter with a hinged cover; 3,844,702 which discloses a centrifugal mold for forming dentures; 4,008,990 which discloses a mold apparatus with two mold halves for forming polyurethane foam products; 4,411,531 discloses an extruder having a pivotal member which is provided for ease of cleaning a ram section of the apparatus. The arrangements do not disclose or suggest a shell mold apparatus in which a bottom shell mold is carried on a spindle for rotation on a spider and wherein a moveable cover carrier is operated to position either a cover or a top concave heated shell mold part in a closed position on the bottom shell mold during rotational molding and in an opened position on the spindle during cleaning of the shell mold surfaces so as to reduce the mold cycle time.

### Summary of the Invention

This invention includes an apparatus as defined in Claim 1.

An object of the present invention is to reduce the cycle time required to clean the facing surfaces of the mold components in a rotational mold apparatus after thermoplastic material has been deposited, cured and removed from the mold components.

A further object of the present invention is to provide a rotational mold apparatus in which the mold can be opened and closed without removing either a cover or a top mold member from a support spindle for a bottom mold member.

A still further object is to provide a shell mold apparatus for rotational casting of thermoplastic polymer particles against the surfaces of heated shell mold parts including either a cover or a top shell mold for closing a bottom shell mold during rotation of the apparatus to form a thin polymer shell on the casting surfaces of the closed mold parts wherein a spindle or base frame supports a bottom shell mold to receive a charge of thermoplastic polymer particles and for forming part of a rotationally cast article and wherein a carrier supports either a cover or a top shell mold in either a closed position with respect to the bottom shell mold or in an open position with respect thereto; and a hinged support causes the carrier to lift from the spindle to a raised open position to provide access to the interior of the bottom shell mold and to the surfaces of the cover or the top shell mold for cleaning between rotational molding cycles without removing the cover or the top shell mold from the spindle.

Yet another feature of the invention is to provide for such lift by providing a brace aft on the spindle and a pivot pin on the brace connected to the carrier for pivotally supporting the carrier on the brace for swinging motion toward and away from the spindle.

A still further feature of the invention is to provide a hinged spindle assembly wherein a limit stop holds the carrier in its raised open position.

### Brief Description of the Drawings

These and other objects, features and advantages of the present invention will become more apparent from the following written description when taken in conjunction with the drawings wherein:
FIG. 1 is a schematic representation in plan view of a rotational molding apparatus including the hinged spindles of the present invention;
FIG. 2 is a front elevational view of the hinged spindle of the present invention;
FIG. 3 is a side elevational view of the present invention in an open position for cleaning; and
FIG. 4 is a top elevational view of the hinged spindle in FIG. 2 shown in an opened position.

### Description of a Preferred Embodiment

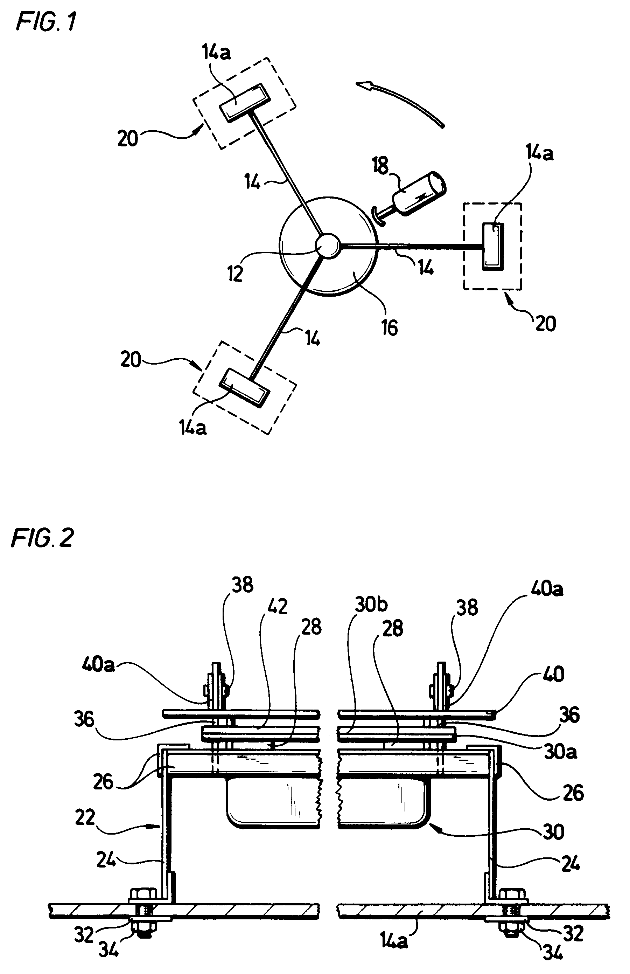

Referring now to FIG. 1, a rotational molding apparatus 10 is shown. It includes a central drive 12 connected by spider arms 14 which extend radially thereof. The spider arms 14 rotate with the central drive 12. Additionally the spider and central drive 12 are supported on a platform 16 which is pivoted about a second axis perpendicular to the axis of rotation of the spider arms 14 by a second drive 18. As a consequence the ends 14a of the spider arms can move about two axes.

Each spider arm 14 carries a spindle assembly 20 constructed in accordance with the present invention to be easily cleaned and to be formed to support either two mold halves or a single concave mold half and a cover. While shown on a two axis drive, the spindle assembly is equally suitable for use on a one axis system in which only drive 14 is used.

More particularly, the spindle assembly 20 includes a frame 22 having four corner legs 24 joined by side frame members 26. The side frame members 26 support mold hanger plates 28. The hanger plates 28 support the neck 30a of a bottom shell mold 30. In the illustrated arrangement the frame legs 24 are connected to mounting plates 32 on the spider arms 14 by suitable fasteners 34, e.g., nuts and bolts.

The spindle assembly 20 further includes a bracket 36 located on the inboard or aft section of the spindle. The bracket 36 extends vertically of the neck 30a and has a distal end 36a with a bore 36b therethrough. The bore 36b receives a hinge pin 38 that connects to the aft end 40a of a downwardly inclined cover carrier or top shell mold carrier frame 40. The frame 40 has four sides which define an inner opening 40b that will accommodate an upper mold set if desired. The carrier frame 40 connects to a cover 42 which will seal an open upper end 30b of the concave shell mold 30 when the mold is closed during a rotational casting of the thermoplastic material. Such deposition phase includes deposition of a charge of suitable thermoplastic casting material, e.g., polyvinyl chloride particles, polypropylene particles or polyethylene particles against the heated surfaces 30c of the concave shell mold 30 by rotating the closed mold on the aforedescribed multiple axis support. The charge of material is thus evenly distributed across the casting surface 30c which is heated to fuse the particles to form a thin, solid shell article with a shape conforming to that of the casting surface 30c.

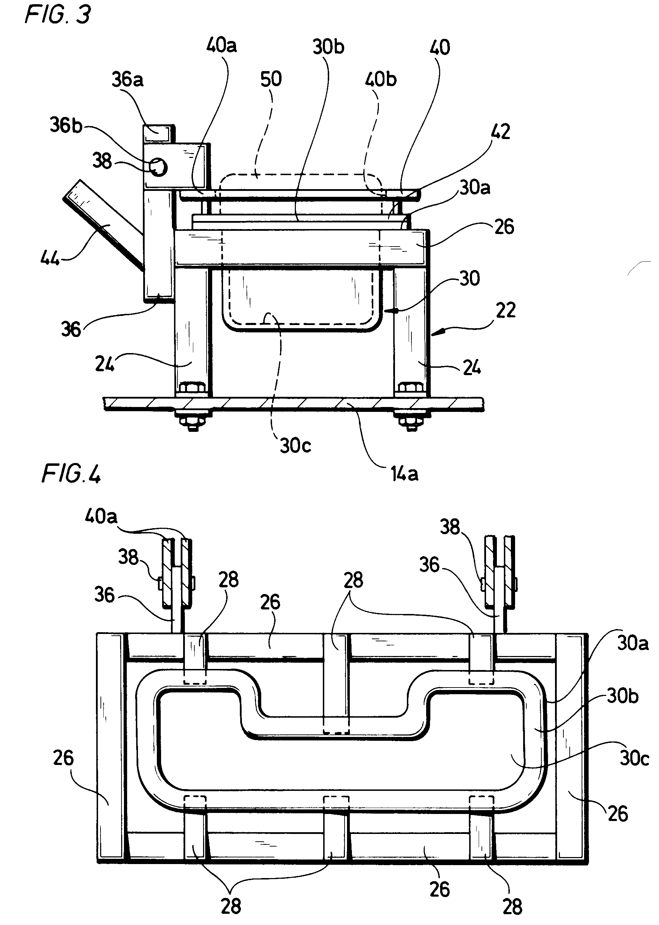

Following casting the hinged cover carrier 40 is lifted upwardly to pivot about the hinge pin as shown in FIG. 3 to provide access to remove the finished part from the concave shell mold 30. The raised position, shown in FIG. 3, also enables both the inside surface 42a of the cover and the casting surface 30c to be cleaned in preparation for a subsequent casting sequence.

The raised hinged cover carrier 40 is held in its raised position by a mechanical stop 44 which is located on the inboard or aft side of the spindle at an outward inclination with respect to the spindle.

The present invention provides a low cost spindle construction that will accommodate most molds for casting thin shells for automotive trim products such as armrests, console shells and the like. The spindle construction can be adapted to other molds such as door panels, headrests and deeper draw armrests by increasing the height of the spindle frame.

The invention is also able to support a top set of concave molds 50 fit inside the carrier frame opening 40b as shown in dotted line in Fig. 3. The assembly enables a mold to be opened and cleaned with either a cover or concave upper mold part on the carrier without removing the cover or top set of molds from the spindles 20. Consequently, less cycle time is required to clean and seal the molds.

## Claims

1. A shell mold apparatus (10) for rotational casting of thermoplastic polymer particles against the surfaces of heated mold parts including
base support means (22) supporting a bottom shell mold (30) and
top support means (40) supporting a top mold part (50) for closing the bottom shell mold (30)
**characterized in that**
the top support means (40) is designed for alternatively supporting either a mold cover (50) or a top shell mold and that
the top support means (40) is pivotable relative to the base support means (22) in order to support the mold cover (50) or the top shell mold in either a closed position with respect to the bottom shell mold (30) or in a raised open position with respect thereto to provide access to the interior of said bottom shell mold (30c) and to the surfaces of the cover (42a) or the top shell mold (50) between rotational molding cycles without having to remove the cover (50) or the top shell mold.

2. The shell mold apparatus (10) of claim 1, characterized in that the base support means (22) comprises four corner legs (24), means for fixedly securing each of said corner legs (24) at one end thereof to the distal end of a spider arm (14) extending from a central drive (12) and side frame members (26) connecting said four corner legs (24) at the opposite ends thereof.

3. The shell mold apparatus (10) of claim 2, characterized in that hanger plates (28) are connected to said side frame members (26) extending inwardly thereof in substantially the plane containing the opposite ends of said four corner legs (24) for supporting the bottom shell mold (30).

4. The shell mold apparatus (10) of one of the preceding claims, characterized in that the top support means (40) comprises a carrier frame having four sides defining an inner opening (40b) which opens above said carrier frame when the carrier frame is in a closed position to accommodate the top shell mold (50) extending above said carrier frame.

5. The shell mold apparatus (10) of claim 4, characterized in that said four sides further include means thereon for alternatively supporting the mold cover (50) at a point below said four sides for sealing the bottom shell mold (30) when the top shell mold (50) is omitted and for alternatively supporting the top shell mold (50) within the carrier frame to seal against the bottom shell mold (30) when the mold cover (50) is omitted.

6. The shell mold apparatus (10) according to one or more of the preceding claims, characterized in that the top support means (40) includes an end adapted to be connected to a hinge pin (38).

7. The shell mold apparatus (10) of claim 2 and 6, characterized by two braces connected to one of said side frame members (26) at space points thereon and extending above said one of said side frame members (26), two hinge pins (38) extending through one of said braces, respectively, at a point above said side frame members (26) and above said carrier frame when it is in its closed position, each of said hinge pins (38) connected to said end of said carrier frame for mounting said carrier frame for pivotal movement with respect to the bottom shell mold (30) to either lift the mold cover (50) therefrom or to lift the top shell mold therefrom if the cover is omitted.

8. The shell mold apparatus (10) according to claim 7, characterized by an outwardly inclined limit stop member connected to the base support means (22) for engaging said carrier frame to support said carrier frame in a raised open position.

## Patentansprüche

1. Schalenformgerät (10) zum Rotationsgießen von thermoplastischen Polymerpartikeln gegen die Oberflächen beheizter Formteile, welches eine Basistragvorrichtung (22), die eine Bodenschalenform (30) trägt, und eine Oberteiltragvorrichtung (40), die ein Aufsatzformteil (50) zum Schließen der Bodenschalenform (30) trägt, umfaßt, **dadurch gekennzeichnet**, daß die Oberteiltragvorrichtung (40) so ausgebildet ist, daß sie entweder einen Formdeckel (50) oder eine Aufsatzschalenform tragen kann, und daß die Oberteiltragvorrichtung (40) gegenüber der Basistragvorrichtung (22) schwenkbar ist, um den Formdeckel (50) oder die Aufsatzschalenform bezüglich der Bodenschalenform (30) in einer Schließstellung oder in einer abgehobenen Offenstellung zu halten, damit zwischen Rotationsgießzyklen das Innere der Bodenschalenform (30c) und die Oberflächen des Deckels (42a) oder der Aufsatzschalenform (50) zugänglich sind, ohne daß der Deckel (50) oder die Aufsatzschalenform entfernt werden müssen.

2. Schalenformgerät (10) nach Anspruch 1, dadurch gekennzeichnet, daß die Basistragvorrichtung (22) vier Eckbeine (24) besitzt, daß Mittel zum starren Befestigen eines jeden der Eckbeine (24) mit einem seiner Enden am äußeren Ende eines Speichenarms (14) vorgesehen sind, welchletzterer sich von einem Zentralantrieb (12) weg erstreckt, und daß die gegenüberliegenden Enden der Eckbeine (24) mittels Flankenrahmenteilen (26) miteinander verbunden sind.

3. Schalenformgerät (10) nach Anspruch 2, dadurch gekennzeichnet, daß Aufhängerplatten (28) zum Tragen der Bodenschalenform (30) mit den Flankenrahmenteilen (26) verbunden sind und sich von diesen im wesentlichen in einer die genannten gegenüberliegenden Enden der Eckbeine (24) enthaltenden Ebene nach innen erstrecken.

4. Schalenformgerät (10) nach einem der vorstehenden Ansprüche, dadurch gekennzeichnet, daß die Oberteiltragvorrichtung (40) einen Tragrahmen besitzt, welcher vier Seiten aufweist, die eine innere Öffnung (40b) definieren, die sich über dem Tragrahmen öffnet, wenn dieser eine Schließstellung einnimmt, um das sich über diesen Tragrahmen erstreckende Aufsatzformteil (50) aufzunehmen.

5. Schalenformgerät (10) nach Anspruch 4, dadurch gekennzeichnet, daß an den besagten vier Seiten Mittel vorgesehen sind, um entweder in Abwesenheit des Aufsatzformteils (50) den Formdeckel (50) zum Verschließen der Bodenschalenform (30) unterhalb dieser vier Seiten zu halten, oder um in Abwesenheit des Formdeckels (50) das Aufsatzformteil (50) innerhalb des Tragrahmens zum Abdichten gegen die Bodenschalenform (30) zu halten.

6. Schalenformgerät (10) nach einem oder mehreren der vorstehenden Ansprüche, dadurch gekennzeichnet, daß die Oberteiltragvorrichtung (40) ein Ende aufweist, welches zum Verbinden mit einem Gelenkstift (38) gestaltet ist.

7. Schalenformgerät (10) nach den Ansprüchen 2 und 6, gekennzeichnet durch zwei Stege, welche im Abstand voneinander mit einem der Flankenrahmenteile (26) verbunden sind und sich über diesem Flankenrahmenteil erstrecken, sowie durch zwei Gelenkstifte (38), die sich jeweils durch einen der Stege erstrecken, und zwar über dem besagten Flankenrahmenteil (26) und über dem Tragrahmen, wenn sich dieser in seiner Schließstellung befindet, wobei jeder dieser Gelenkstifte (38) zum Anbringen des Tragrahmens derart, daß er bezüglich der Bodenschalenform (30) schwenkbar ist, mit dem besagten Ende des Tragrahmens verbunden ist, um entweder den Formdeckel (50) oder - in Abwesenheit des letzteren - das Aufsatzformteil von der Bodenschalenform (30) abheben zu können.

8. Schalenformgerät (10) nach Anspruch 7, gekennzeichnet durch ein mit der Basistragvorrichtung (22) verbundenes, nach außen geneigtes, mit dem Tragrahmen zusammenwirkendes Begrenzungsanschlagglied zum Halten des Tragrahmens in einer angehobenen Offenstellung.

## Revendications

1. Appareil à moule carapace (10) pour le moulage par rotations de particules polymères thermoplastiques contre les surfaces des parties du moule chauffé comprenant :
un dispositif de support de base (22) supportant un moule carapace de fond (30) et
un dispositif de support de dessus (40) supportant une partie du moule de dessus (50) pour fermer le moule carapace du fond (30)
caractérisé en ce que
le dispositif de support du dessus (40) est conçu pour supporter alternativement soit un couvercle du moule (50) soit un moule carapace de dessus et en ce que
le dispositif de support de dessus (40) peut pivoter par rapport au dispositif de support de base (22) afin de supporter le couvercle du moule (50) ou le moule carapace du dessus soit dans une position fermée par rapport au moule carapace du fond (30) soit dans une position ouverte relevée par rapport à celui-ci pour fournir un accès à l'intérieur dudit moule carapace du fond (30) et aux surfaces du couvercle (42a) ou au moule carapace de dessus (50) entre des cycles de moulage par rotations sans avoir à enlever le couvercle (50) ou le moule carapace du dessus.

2. Appareil à moule carapace (10) selon la revendication 1, caractérisé en ce que le dispositif de support de base (22) comprend quatre pieds d'angle (24), des dispositifs pour fixer fermement chacun desdits pieds d'angle (24) sur une extrémité de ceux-ci à l'extrémité distale d'un bras d'une étoile (14) s'étendant à partir d'un entraînement central (12) et des pièces du cadre latéral (26) reliant lesdits quatre pieds d'angle (24) aux extrémités opposées de ceux-ci.

3. Appareil à moule carapace (10) selon la revendication 2, caractérisé en ce que des plaques de suspension (28) sont reliées auxdites pièces du cadre latéral (26) s'étendant vers l'intérieur de celui-ci essentiellement dans le plan contenant des extrémités opposées desdits quatre pieds d'angle (24) pour supporter le moule carapace du fond (30).

4. Appareil à moule carapace (10) selon l'une quelconque des revendications précédentes, caractérisé en ce que le dispositif de support du dessus (40) comprend un cadre porteur ayant quatre cotés définissant une ouverture intérieure (40b) qui s'ouvre au-dessus dudit cadre porteur lorsque le cadre porteur est dans une position fermée pour loger le moule carapace du dessus (50) s'étendant au-dessus dudit cadre porteur.

5. Appareil à moule carapace (10) selon la revendication 4, caractérisé en ce que lesdits quatre côtés comprennent en outre un dispositif sur ceux-ci pour supporter alternativement le couvercle du moule (50) en un point sous lesdits quatre côtés pour fermer le moule carapace du fond (30) lorsque le moule carapace du dessus (50) est omis et pour supporter alternativement le moule carapace du dessus (50) dans le cadre porteur pour fermer hermétiquement contre le moule carapace du fond (30) lorsque le couvercle du moule (50) est omis.

6. Appareil à moule carapace (10) selon l'une quelconque ou plusieurs des revendications précédentes, caractérisé en ce que le dispositif de support du dessus (40) comprend une extrémité adaptée à relier à un gond de charnière (38).

7. Appareil à moule carapace (10) selon les revendications 2 et 6, caractérisé par deux attaches reliées à une desdites pièces du cadre latéral (26) en des points espacés sur celui-ci et s'étendant au dessus de l'une desdites pièces du cadre latéral (26), deux gonds de charnière (39) s'étendant via une desdites attaches, respectivement, en un point situé au dessus desdites pièces du cadre latéral (26) et au dessus dudit cadre porteur lorsqu'il est dans une position fermée, chacun desdits gonds de charnière (35) étant reliés à ladite extrémité dudit cadre porteur pour le montage dudit cadre porteur pour effectuer un mouvement pivotant par rapport au moule carapace du fond (30) soit pour relever le couvercle du moule (50) à partir de celui-ci soit pour relever le moule carapace de dessus à partir de celui-ci si le couvercle est omis.

8. Appareil à moule carapace (10) selon la revendication 7, caractérisé par une pièce de butée de limite inclinée vers l'extérieur reliée au dispositif de support de base (22) pour être en prise avec ledit cadre porteur pour supporter ledit cadre porteur dans une position ouverte relevée.
